# EUROPEAN PATENT APPLICATION

(11) **EP 3 851 977 A1**
(43) Date of publication of application: **21.07.2021**
(21) Application number: 21151532.5
(22) Date of filing: 14.01.2021
(51) Int. Cl.: G06F 16/36, G06F 16/901

(54) **METHOD, APPARATUS, ELECTRONIC DEVICE, AND STORAGE MEDIUM FOR EXTRACTING SPO TRIPLES**

(30) Priority: 15.01.2020 CN 202010042686
(71) Applicant: BEIJING BAIDU NETCOM SCIENCE AND TECHNOLOGY CO. LTD., 100085 Beijing (CN)
(72) Inventor: HE, Wei, Beijing, 100085 (CN); LI, Shuangjie, Beijing, 100085 (CN); SHI, Yabing, Beijing, 100085 (CN); JIANG, Ye, Beijing, 100085 (CN); ZHANG, Yang, Beijing, 100085 (CN); ZHU, Yong, Beijing, 100085 (CN)
(74) Representative: Maiwald Patent- und Rechtsanwaltsgesellschaft mbH

(57) **Abstract**

The disclosure provides a method and an apparatus for extracting SPO triples, an electronic device, and a storage medium, relates to the field of artificial intelligence technologies. The solution may include: inputting annotated training data into each of multiple extraction models; predicting SPO triples satisfying defined relations in the annotated training data through each of multiple extraction models; combining the predicted SPO triples corresponding to each of multiple extraction models; extracting SPO triples satisfying screening conditions from the combined SPO triples; mining SPO triples with missing annotations from the annotated training data based on the SPO triples satisfying screening conditions, in response to that the SPO triples satisfying screening conditions do not satisfy output conditions; supplementing the SPO triples with missing annotations into the annotated training data; repeating the inputting, predicting, combining, extracting, mining and supplementing until the SPO triples satisfying screening conditions satisfy the output conditions.

## Description

### FIELD

The disclosure relates to the field of computer processing technologies, further to the field of artificial intelligence technologies, and particularly to a method for extracting SPO (subject, predication, object) triples, an apparatus for extracting SPO triples, an electronic device, and a storage medium.

### BACKGROUND

A relation extraction system may extract entity relation data from natural language text. The entity relation data may be also known as SPO (subject, predication, object) triple data. The relation extraction system may obtain a pair of entities (i.e., a pair of subject S and object O) and a relation (i.e., predication P) between the pair of entities based on the extracted data, and construct a corresponding triple knowledge. This knowledge extraction manner aims to mine the entity relation data with the high confidence from massive Internet texts through extraction technologies.

### SUMMARY

In the first aspect, some embodiments of the disclosure provide a method for extracting SPO triples. The method includes: inputting annotated training data into each of multiple extraction models; predicting SPO triples satisfying defined relations in the annotated training data through each of multiple extraction models; combining the predicted SPO triples corresponding to each of multiple extraction models; extracting SPO triples satisfying screening conditions from the combined SPO triples; mining SPO triples with missing annotations from the annotated training data based on the SPO triples satisfying screening conditions, in response to that the SPO triples satisfying screening conditions do not satisfy output conditions; supplementing the SPO triples with missing annotations into the annotated training data; repeating the inputting, predicting, combining, extracting, mining and supplementing until the SPO triples satisfying screening conditions satisfy the output conditions.

The above-mentioned embodiments have the following advantages or beneficial effects. The above-mentioned embodiments may predict the training data through multiple extraction models, and predict the SPO triples satisfying defined relations from the training data, instead of predicting the training data through a single extraction model. When the SPO triples satisfying screening conditions do not satisfy the output conditions, the SPO triples with missing annotations may be mined and then supplemented into the annotated training data. The above-mentioned embodiments may predict the supplemented training data through multiple extraction models, which can not only effectively improve a recall rate of SPOs, but also save labor costs and improve extraction efficiency.

In some embodiments, extracting the SPO triples satisfying screening conditions from the combined SPO triples in the above-mentioned embodiments may include: counting a number of times each SPO triple in the combined SPO triples is predicted by each of multiple extraction models; and determining that the SPO triple is the SPO triple satisfying screening conditions in response to that a sum of the number of times the SPO triple in the combined SPO triples is predicted by each of multiple extraction models exceeds a preset threshold, or inputting each SPO triple in the combined SPO triples into a classification model; classing each SPO triple in the combined SPO triples into a first category or a second category through the classification model; and determining SPO triples of the first category or SPO triples of the second category as the SPO triples satisfying screening conditions.

The above-mentioned embodiments have the following advantages or beneficial effects. Each extraction model in the above-mentioned embodiments may extract the SPO triples satisfying screening conditions from the combined SPO triples through the above two manners. Each extraction model in the above-mentioned embodiments may select one of the above two manners based on its needs, or pre-configure one of the above two manners, which is not limited herein.

In some embodiments, mining the SPO triples with missing annotations from the annotated training data based on the SPO triples satisfying screening conditions in the above-mentioned embodiments may include: identifying each SPO triple satisfying screening conditions to obtain a syntactic feature and a morphological feature of each SPO triple satisfying screening conditions; setting at least one mining template based on the syntactic feature and the morphological feature of each SPO triple satisfying screening conditions; and mining the SPO triples with missing annotations from the annotated training data based on the at least one mining template.

The above-mentioned embodiments have the following advantages or beneficial effects. The above-mentioned embodiments may set at least one mining template by identifying the SPO triples, mine the SPO triples with missing annotations from the annotated training data through one or more mining templates, and supplement the SPO triples with missing annotations into the annotated training data. The above-mentioned embodiments may predict the supplemented training data through multiple extraction models, which can not only effectively improve a recall rate of SPOs, but also save labor costs and improve extraction efficiency.

In some embodiments, the method further includes: performing conflict verification on each SPO triple in the combined SPO triples by a preset conflict verification method; extracting the SPO triples satisfying screening conditions from SPO triples that are successfully verified; and removing SPO triples that are not successfully verified.

The above-mentioned embodiments have the following advantages or beneficial effects. The above-mentioned embodiments may perform the conflict verification on each SPO triple in the combined SPO triples through the preset conflict verification method, which may effectively improve the accuracy of the SPO triples.

In some embodiments, the method further includes: removing, an annotation of a SPO triple that is not predicted by any extraction model, from the annotated training data.

The above-mentioned embodiments have the following advantages or beneficial effects. The above-mentioned embodiments, when a certain SPO triple has not been predicted by any extraction model, it means that this SPO triple is inaccurate or invalid, the annotation of this SPO triple may be deleted from the training data, which may improve the accuracy of the SPO triples.

In the second aspect, some embodiments of the disclosure provide an apparatus for extracting SPO triples. The apparatus includes: an extraction model module, a multi-model fusion module, a post-processing module, and a data enhancement module. The extraction model module is configured to, input annotated training data into each of multiple extraction models, and predict SPO triples satisfying defined relations in the annotated training data through each of multiple extraction models. The multi-model fusion module is configured to, combine the predicted SPO triples corresponding to each of multiple extraction models, and extract SPO triples satisfying screening conditions from the combined SPO triples. The post-processing module is configured to, mine SPO triples with missing annotations from the annotated training data based on the SPO triples satisfying screening conditions, in response to that the SPO triples satisfying screening conditions do not satisfy output conditions. The data enhancement module is configured to, supplement the SPO triples with missing annotations into the annotated training data.

In some embodiments, the multi-model fusion module is configured to: count a number of times each SPO triple in the combined SPO triples is predicted by each of multiple extraction models; and determine that the SPO triple is the SPO triple satisfying screening conditions in response to that a sum of the number of times the SPO triple in the combined SPO triples is predicted by each of multiple extraction models exceeds a preset threshold, or input each SPO triple in the combined SPO triples into a classification model; class each SPO triple in the combined SPO triples into a first category or a second category through the classification model; and determine SPO triples of the first category or SPO triples of the second category as the SPO triples satisfying screening conditions.

In some embodiments, the post-processing module includes: an identifying sub module, configured to identify each SPO triple satisfying screening conditions to obtain a syntactic feature and a morphological feature of each SPO triple satisfying screening conditions; a setting sub module, configured to set at least one mining template based on the syntactic feature and the morphological feature of each SPO triple satisfying screening conditions; and a mining sub module, configured to mine the SPO triples with missing annotations from the annotated training data based on the at least one mining template.

In some embodiments, the multi-model fusion module is further configured to: perform conflict verification on each SPO triple in the combined SPO triples by a preset conflict verification method; extract the SPO triples satisfying screening conditions from SPO triples that are successfully verified; and remove SPO triples that are not successfully verified.

In some embodiments, the data enhancement module is further configured to: remove, an annotation of a SPO triple that is not predicted by any extraction model, from the annotated training data.

In the third aspect, some embodiments of the disclosure provide an electronic device. The electronic device includes: at least one processor and a memory. The memory is communicatively coupled to the at least one processor. The memory is configured to store instructions executable by the at least one processor. When the instructions are executed by the at least one processor, the at least one processor is caused to implement the method in any above-mentioned embodiment.

In the fourth aspect, some embodiments of the disclosure provide a non-transitory computer-readable storage medium having computer instructions stored thereon. The computer instructions are configured to cause a computer to execute the method in any above-mentioned embodiment.

Embodiments of the disclosure have the following advantages or beneficial effects. The method for extracting SPO triples, the apparatus for extracting SPO triples, the electronic device, and the storage medium, provided in the disclosure, first may input the annotated training data into multiple extraction models respectively, and predict the SPO triples satisfying defined relations in the annotated training data through multiple extraction models respectively; then combine the predicted SPO triples corresponding to each of multiple extraction models, and extract the SPO triples satisfying screening conditions from the combined SPO triples; and if the SPO triples satisfying screening conditions do not satisfy the output conditions, mine the SPO triples with missing annotations from the annotated training data based on the SPO triples satisfying screening conditions; and then supplement the SPO triples with missing annotations into the annotated training data, and repeat the above actions until the SPO triples satisfying screening conditions satisfy the output conditions. That is, the disclosure may add the SPO triples with missing annotations into the annotated training data, input the supplemented annotated training data into multiple extraction models respectively, and the above actions are repeated until the SPO triples satisfying screening conditions satisfy the output conditions. Therefore, the recall rate of SPO triples may be improved. In the related SPO extraction method, such as extraction through mining templates or through the single extraction model, it will lead to the low recall rate. Because the disclosure employs multiple extraction models to predict the training data separately, and supplements the SPO triples with missing annotations into the annotated training data, which overcomes the technical problems of low recall rate and high labor costs in the related art, thereby effectively improving the recall rate of SPO triples, saving the labor costs, and improving extraction efficiency. Moreover, the technical solutions of the embodiments of the disclosure are simple and convenient to implement, easy to popularize, and have a wider application range.

The other effects of the above-mentioned optional methods will be described below in conjunction with specific embodiments.

It should be understood that, contents described in this section are not intended to identify key or important features of embodiments of the disclosure, nor is it intended to limit the scope of the disclosure. Other features of the disclosure may become apparent from the following description.

### BRIEF DESCRIPTION OF THE DRAWINGS

The accompanying drawings are used for better understanding the solution and do not constitute a limitation of the disclosure.
FIG. 1 is a flow chart illustrating a method for extracting SPO triples according to embodiments of the disclosure.
FIG. 2 is a flow chart illustrating a method for extracting SPO triples according to embodiments of the disclosure.
FIG. 3 is a block diagram illustrating a system for extracting SPO triples according to embodiments of the disclosure.
FIG. 4 is a block diagram illustrating an apparatus for extracting SPO triples according to embodiments of the disclosure.
FIG. 5 is a block diagram illustrating a post-processing module according to embodiments of the disclosure.
FIG. 6 is a block diagram illustrating an electronic device capable of implementing a method for extracting SPO triples according to embodiments of the disclosure.

### DETAILED DESCRIPTION

Description will be made below to exemplary embodiments of the disclosure with reference to accompanying drawings, which includes various details of embodiments of the disclosure to facilitate understanding and should be regarded as merely examples. Therefore, it should be recognized by the skilled in the art that various changes and modifications may be made to the embodiments described herein without departing from the scope and spirit of the disclosure. Meanwhile, for clarity and conciseness, descriptions for well-known functions and structures are omitted in the following description.

From the perspective of constructing a knowledge graph, the entity relation may represent an edge that associates nodes representing entities, which belongs to a knowledge with strong schema and improves connectivity of the knowledge graph. From the perspective of products and applications, the entity relation data is one of the most important information of the entity, which marks a bridge to other entity. The entity relation data may directly satisfy requirements of users on entity association, effectively improve people's efficiency in searching and browsing entities, and improve user experience. Typical products and applications of the entity relation data include entity question and answer and entity recommendation. However, annotated training data for training the extraction model and the test data in the real scene have inconsistencies in distribution. The training data constructed through remote supervision and crowdsourced annotation manners is not complete, and has omissions or is not accurate. This problem affects the training effect of the model.

In the related art, two manners are usually used for extracting SPOs: (1) extracting SPOs through mining templates, where this manner manually configures mining templates for specific websites or fixed syntax rules, such as well-defined webpage regular templates and syntactic rules for targeted extraction on fixed structure data in webpages; (2) extracting SPOs through a single extraction model, where this manner achieve SPO extraction function through a single deep learning model by using words, word segmentations, part of speech, and other information in sentences.

In the process of implementing this application n, the inventors found that at least the following problems existing in the related art as follows.

For the manner (1), the target templates need to be manually configured, thus labor costs may be large, and further it is difficult to cover all the targets in the real scene, resulting in a low recall rate; for the manner (2), when the annotated training data for training the extraction model is inconsistent with the test data in the real scene, the single extraction model cannot cover all the effective features in the training data well, resulting in the low recall rate.

In view of the above, embodiments of the disclosure propose a method for extracting SPO (subject, predication, object) triples, an apparatus for extracting SPO triples, an electronic device, and a storage medium, which can not only effectively increase a recall rate of SPOs, but also save labor costs and improve extraction efficiency.

### Embodiment One

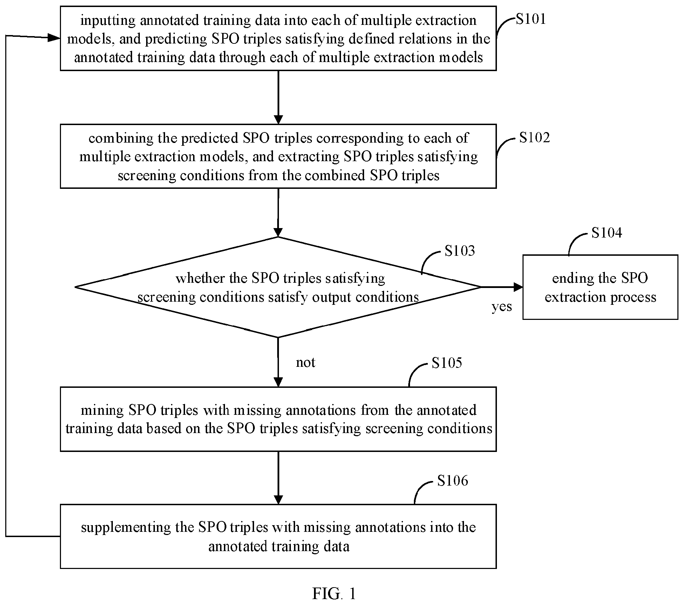

FIG. 1 is a flow chart illustrating a method for extracting SPO triples according to embodiments of the disclosure. The method may be executed by an apparatus for extracting SPO triples or an electronic device. The apparatus or electronic device may be implemented by software and/or hardware. The apparatus or electronic device may be integrated in any smart device with a network communication function. As illustrated in FIG. 1, the method may include the following.

At block S101, annotated training data is inputted into each of multiple extraction models, and SPO triples satisfying defined relations in the annotated training data are predicted through each of multiple extraction models.

In some embodiments of the disclosure, the electronic device may input the annotated training data into multiple extraction models respectively, and predict the SPO triples satisfying defined relations in the annotated training data through multiple extraction models respectively. In detail, the electronic device may first annotate the unannotated training data, and then input the annotated training data into multiple extraction models respectively. It is assumed that there are N extraction models in the disclosure, i.e., extraction model 1, extraction model 2, ..., extraction model N, where N is a natural number greater than 1. In this action, the electronic device may input the annotated training data into extraction model 1, extraction model 2, ..., extraction model N, respectively. Extraction model 1 may employ operator 1 to predict the SPO triples that satisfy defined relations in the annotated training data; extraction model 2 may employ operator 2 to predict the SPO triples that satisfy defined relations in the annotated training data; and the like.

At block S102, the predicted SPO triples corresponding to each of multiple extraction models are combined, and SPO triples satisfying screening conditions are extracted from the combined SPO triples.

In some embodiments of the disclosure, the electronic device may combine the SPO triples predicted by each of multiple extraction models, and extract the SPO triples satisfying screening conditions from the combined SPO triples. In detail, the number of SPO triples predicted by each extraction model may be one or multiple, which is not limited herein. It is supposed that the SPO triples predicted by extraction model 1 forms a first subset; the SPO triples predicted by extraction model 2 forms a second subset; ...; the SPO triples predicted by extraction model N forms a N^{th} subset. In this action, the electronic device may combine all the SPO triples in the first subset, the second subset, ..., the N^{th} subset into one SPO set. That is, the SPO set includes all the SPO triples in the first subset, the second subset, ..., the N^{th} subset; and the SPO triples satisfying screening conditions are extracted from the SPO set.

In some embodiments of the disclosure, the electronic device may extract the SPO triples satisfying screening conditions from the combined SPO triples through the following two manners. The first manner is a voting strategy: counting a number of times each SPO triple in the combined SPO triples is predicted by each of multiple extraction models; and determining that the SPO triple is the SPO triple satisfying screening conditions in response to that a sum of the number of times the SPO triple in the combined SPO triples is predicted by each of multiple extraction models exceeds a preset threshold. The second manner is a classification model strategy: inputting each SPO triple in the combined SPO triples into a classification model; classing each SPO triple in the combined SPO triples into a first category or a second category through the classification model; and determining SPO triples of the first category or SPO triples of the second category as the SPO triples satisfying screening conditions. In detail, in the classification model strategy, each SPO triple may be classified into a correct category or an incorrect category through the classification model, and then the SPO triples classified into the correct category may be determined as the SPO triples that satisfy screening conditions.

At block S103, it is determined whether the SPO triples satisfying screening conditions satisfy output conditions. If yes, the action at block S104 may be executed, and if not, the action at block S105 may be executed.

In some embodiments of the disclosure, the electronic device may determine whether the SPO triples satisfying screening conditions satisfy output conditions. When the SPO triples satisfying screening conditions satisfy the output conditions, the electronic device may execute the action at block S104. When the SPO triples satisfying screening conditions do not satisfy the output conditions, the electronic device may execute the action at block S105. In detail, the output conditions in the disclosure may be: the recall rate of the SPO triples in the annotated training data being greater than a preset threshold. That is, the number of the SPO triples extracted from the annotated training data is sufficiently large.

At block S104, the SPO extraction process ends.

In some embodiments of the disclosure, when the electronic device determines that the SPO triples satisfying screening conditions satisfy the output conditions, i.e., the number of the SPO triples extracted from the annotated training data is sufficiently large, the electronic device may end the SPO extraction process.

At block S105, SPO triples with missing annotations are mined from the annotated training data based on the SPO triples satisfying screening conditions.

In some embodiments of the disclosure, when the electronic device determines that the SPO triples satisfying screening conditions do not satisfy the output conditions, i.e., the number of the SPO triples extracted from the annotated training data is not large enough, the electronic device may mine the SPO triples with missing annotations from the annotated training data based on the SPO triples satisfying screening conditions. In detail, the electronic device may identify each SPO triple satisfying screening conditions to obtain a syntactic feature and a morphological feature of each SPO triple satisfying screening conditions; set at least one mining template based on the syntactic feature and the morphological feature of each SPO triple satisfying screening conditions; and mine the SPO triples with missing annotations from the annotated training data based on the at least one mining template.

At block S106, the SPO triples with missing annotations are supplemented into the annotated training data; and it returns to the action at block S101.

In some embodiments of the disclosure, the electronic device may add the SPO triples with missing annotations into the annotated training data, and then return to execute the action at block S101. In detail, the electronic device may annotate the mined SPO triples with missing annotations in the training data.

In some embodiments of the disclosure, after the electronic device supplements the SPO triples with missing annotations into the annotated training data, the electronic device may remove or delete, an annotation of a SPO triple that is not predicted by any extraction model, from the annotated training data based on the SPO triples predicted by multiple extraction models. In detail, it is assumed that a certain SPO triple in the training data has not been predicted by any extraction model, the electronic device may delete the annotation of this SPO triple from the training data.

The method for extracting SPO triples, provided in embodiments of the disclosure, first may input the annotated training data into multiple extraction models respectively, and predict the SPO triples satisfying defined relations in the annotated training data through multiple extraction models respectively; then combine the predicted SPO triples corresponding to each of multiple extraction models, and extract the SPO triples satisfying screening conditions from the combined SPO triples; and if the SPO triples satisfying screening conditions do not satisfy the output conditions, mine the SPO triples with missing annotations from the annotated training data based on the SPO triples satisfying screening conditions; and then supplement the SPO triples with missing annotations into the annotated training data, and repeat the above actions until the SPO triples satisfying screening conditions satisfy the output conditions. That is, the disclosure may add the SPO triples with missing annotations into the annotated training data, input the supplemented annotated training data into multiple extraction models respectively, and the above actions are repeated until the SPO triples satisfying screening conditions satisfy the output conditions. Therefore, the recall rate of SPO triples may be improved. In the related SPO extraction method, such as extraction through mining templates or through the single extraction model, it will lead to the low recall rate. Because the disclosure employs multiple extraction models to predict the training data separately, and supplements the SPO triples with missing annotations into the annotated training data, which overcomes the technical problems of low recall rate and high labor costs in the related art, thereby effectively improving the recall rate of SPO triples, saving the labor costs, and improving extraction efficiency. Moreover, the technical solutions of the embodiments of the disclosure are simple and convenient to implement, easy to popularize, and have a wider application range.

### Embodiment Two

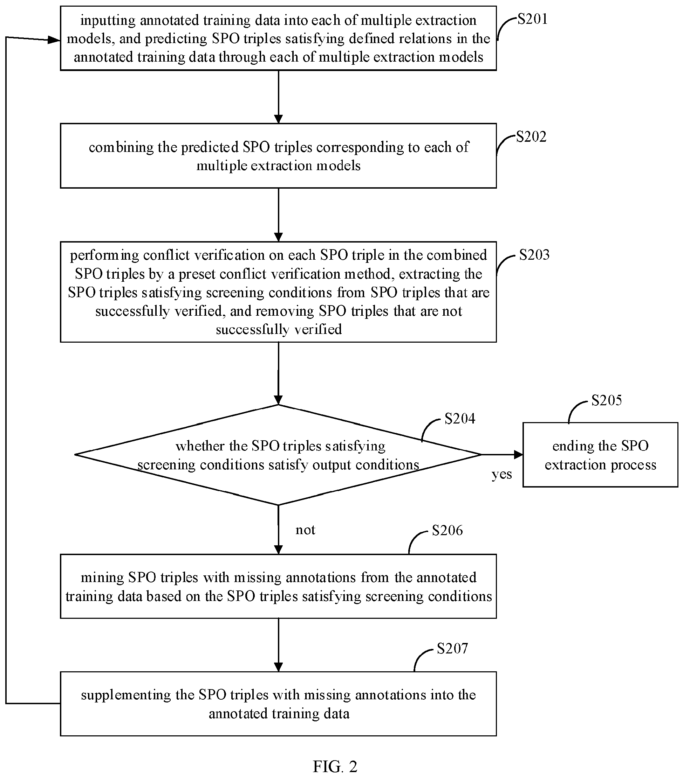

FIG. 2 is a flow chart illustrating a method for extracting SPO triples according to embodiments of the disclosure. As illustrated in FIG. 2, the method may include the following.

At block 201, annotated training data is inputted into each of multiple extraction models, and SPO triples satisfying defined relations in the annotated training data are predicted through each of multiple extraction models.

In some embodiments of the disclosure, the electronic device may input the annotated training data into multiple extraction models respectively, and predict the SPO triples satisfying defined relations in the annotated training data through multiple extraction models respectively. In detail, the electronic device may first annotate the unannotated training data, and then input the annotated training data into multiple extraction models respectively. It is assumed that there are N extraction models in the disclosure, i.e., extraction model 1, extraction model 2, ..., extraction model N, where N is a natural number greater than 1. In this action, the electronic device may input the annotated training data into extraction model 1, extraction model 2, ..., extraction model N, respectively. Extraction model 1 may employ operator 1 to predict the SPO triples that satisfy defined relations in the annotated training data; extraction model 2 may employ operator 2 to predict the SPO triples that satisfy defined relations in the annotated training data; and the like.

At block S202, the predicted SPO triples corresponding to each of multiple extraction models are combined.

In some embodiments of the disclosure, the electronic device may combine the SPO triples predicted by each of multiple extraction models. In detail, the number of SPO triples predicted by each extraction model may be one or multiple, which is not limited herein. It is supposed that the SPO triples predicted by extraction model 1 forms a first subset; the SPO triples predicted by extraction model 2 forms a second subset; ...; the SPO triples predicted by extraction model N forms a N^{th} subset. In this action, the electronic device may combine all the SPO triples in the first subset, the second subset, ..., the N^{th} subset into one SPO set. That is, the SPO set includes all the SPO triples in the first subset, the second subset, ..., the N^{th} subset.

At block S203, conflict verification may be performed on each SPO triple in the combined SPO triples by a preset conflict verification method; the SPO triples satisfying screening conditions are extracted from SPO triples that are successfully verified; and SPO triples that are not successfully verified are removed.

In some embodiments of the disclosure, the electronic device may perform the conflict verification each SPO triple in the combined SPO triples by the preset conflict verification method; extract the SPO triples satisfying screening conditions from SPO triples that are successfully verified; and remove or delete SPO triples that are not successfully verified.

At block S204, it is determined whether the SPO triples satisfying screening conditions satisfy output conditions. If yes, the action at block S205 may be executed, and if not, the action at block S206 may be executed.

In some embodiments of the disclosure, the electronic device may determine whether the SPO triples satisfying screening conditions satisfy output conditions. When the SPO triples satisfying screening conditions satisfy the output conditions, the electronic device may execute the action at block S205. When the SPO triples satisfying screening conditions do not satisfy the output conditions, the electronic device may execute the action at block S206. In detail, the output conditions in the disclosure may be: the recall rate of the SPO triples in the annotated training data being greater than a preset threshold. That is, the number of the SPO triples extracted from the annotated training data is sufficiently large.

At block S205, the SPO extraction process ends.

In some embodiments of the disclosure, when the electronic device determines that the SPO triples satisfying screening conditions satisfy the output conditions, i.e., the number of the SPO triples extracted from the annotated training data is sufficiently large, the electronic device may end the SPO extraction process.

At block S206, SPO triples with missing annotations are mined from the annotated training data based on the SPO triples satisfying screening conditions.

In some embodiments of the disclosure, when the electronic device determines that the SPO triples satisfying screening conditions do not satisfy the output conditions, i.e., the number of the SPO triples extracted from the annotated training data is not large enough, the electronic device may mine the SPO triples with missing annotations from the annotated training data based on the SPO triples satisfying screening conditions. In detail, the electronic device may identify each SPO triple satisfying screening conditions to obtain a syntactic feature and a morphological feature of each SPO triple satisfying screening conditions; set at least one mining template based on the syntactic feature and the morphological feature of each SPO triple satisfying screening conditions; and mine the SPO triples with missing annotations from the annotated training data based on the at least one mining template.

At block S207, the SPO triples with missing annotations are supplemented into the annotated training data; and it returns to the action at block S201.

In some embodiments of the disclosure, the electronic device may add the SPO triples with missing annotations into the annotated training data, and then return to execute the action at block S201. In detail, the electronic device may annotate the mined SPO triples with missing annotations in the training data.

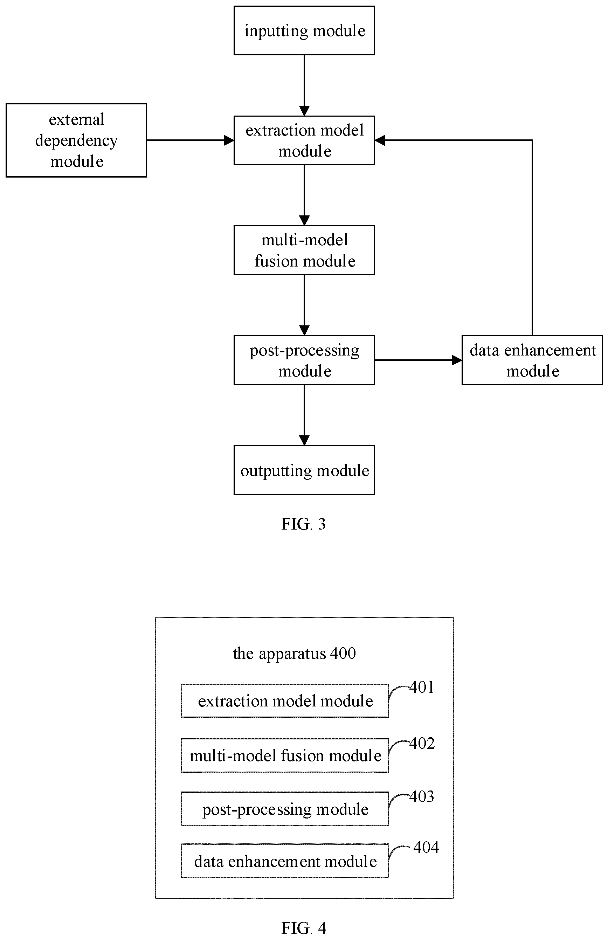

FIG. 3 is a block diagram illustrating a system for extracting SPO triples according to embodiments of the disclosure. As illustrated in FIG. 3, the system may include an inputting module, an extraction model module, a multi-model fusion module, a post-processing module, a data enhancement module, an outputting module, and an external dependency module.

The inputting module is configured to input annotated training data into the extraction model module.

The extraction model module is configured to extract all SPOs that satisfy defined relations from the annotated training data when the annotated training data is inputted. This module supports the addition of multiple extraction operators, that is, multiple extraction models may be employed to obtain the results separately. It is also easy to extend the operators. At present, the main methods of the extraction model module may fall into the following three categories: (1) a pipeline structure model, which may first perform a multi-label relation classification based on biLSTM, and label S and O entity arguments through a biLSTM-CRF sequence labeling model based on the relation type; (2) the joint extraction of semi-pointer-semi-labeled structure based on the expanded convolutional neural network for joint annotation, which first predicts S, and then predicts O and P simultaneously based on S; (3) the joint extraction based on the hierarchical reinforcement learning model, which may decompose the extraction task into a hierarchical structure of two subtasks, i.e., multiple relations in the sentence may be recognized based on the high-level layer of relation detection, and the low-level layer of entity extraction is triggered to extract the related entities of each relation.

The multi-model fusion module is configured to, for all SPOs predicted by multiple extraction models for each training data, call the multi-model fusion operator to select the best multi-model fusion. In this module, the extraction results of multiple extraction operators in the previous module may be easily extended to participate in the selection of the best. The current common practices of the multi-model fusion module are voting and classification. The voting strategy is to count the number of times that the SPO is predicted by the extraction models and the SPO with more votes may be selected as the final result. The classification model strategy is to consider whether to output the SPO as a two-class problem, and predict whether each SPO is an SPO that satisfy screening conditions.

The post-processing module is configured to control the quality of the SPOs outputted by the multi-model fusion module, including conflict verification and syntax-based pattern mining, to improve the accuracy and recall rate of the final outputted SPOs. The conflict verification mainly includes Schema verification, relation conflict detection, strategies of correcting the entity recognition boundary, and the like, aiming to improve the accuracy of the extraction system. The syntax-based pattern mining is to identify syntactic and morphological features and mine SPOs in the sentence by setting specific patterns manually, expanding the recall rate of the extraction system.

The annotated quality of the training data will have an impact on the model effect when the extraction model is trained. The data enhancement module is configured to, improve the quality of the training data through the data enhancement manner. The specific method is to use the trained model to predict the sentences in the training data, and after the processing of the multi-model fusion module and the post-processing module, output the SPOs with missing annotations in the previous training data and add this part of the SPOs to the annotated result of the training data, improving the recall rate of training data. In addition, the annotation of the SPO that is not predicted by all models in the training data to improve the accuracy of the training data. In this way, using this revised training data to retrain and merge the model may effectively improve the effect of the extraction system.

The outputting module is configured to output the SPOs that satisfy the output conditions if the SPOs that satisfy the screening conditions satisfy the output conditions.

The external dependency module is configured to provide external support for the extraction model module, which may include the following deep learning frameworks: word segmentation and part-of-speech tagging tools, Pytorch, keras, Paddle. The extraction model module can be implemented using the above deep learning framework.

The disclosure aims to introduce a variety of extraction models, multi-model fusion and data enhancement into the relation extraction system framework for incomplete data sets. On the one hand, it may reduce the labor costs of manually setting patterns, and use deep learning models to unify all SPOs. On the other hand, a variety of effective features in the original data sets can be enhanced, and the overall system recall can be improved while ensuring accuracy.

The method for extracting SPO triples, provided in embodiments of the disclosure, first may input the annotated training data into multiple extraction models respectively, and predict the SPO triples satisfying defined relations in the annotated training data through multiple extraction models respectively; then combine the predicted SPO triples corresponding to each of multiple extraction models, and extract the SPO triples satisfying screening conditions from the combined SPO triples; and if the SPO triples satisfying screening conditions do not satisfy the output conditions, mine the SPO triples with missing annotations from the annotated training data based on the SPO triples satisfying screening conditions; and then supplement the SPO triples with missing annotations into the annotated training data, and repeat the above actions until the SPO triples satisfying screening conditions satisfy the output conditions. That is, the disclosure may add the SPO triples with missing annotations into the annotated training data, input the supplemented annotated training data into multiple extraction models respectively, and the above actions are repeated until the SPO triples satisfying screening conditions satisfy the output conditions. Therefore, the recall rate of SPO triples may be improved. In the related SPO extraction method, such as extraction through mining templates or through the single extraction model, it will lead to the low recall rate. Because the disclosure employs multiple extraction models to predict the training data separately, and supplements the SPO triples with missing annotations into the annotated training data, which overcomes the technical problems of low recall rate and high labor costs in the related art, thereby effectively improving the recall rate of SPO triples, saving the labor costs, and improving extraction efficiency. Moreover, the technical solutions of the embodiments of the disclosure are simple and convenient to implement, easy to popularize, and have a wider application range.

### Embodiment Three

FIG. 4 is a block diagram illustrating an apparatus for extracting SPO triples according to embodiments of the disclosure. As illustrated in FIG. 4, the apparatus 400 may include: an extraction model module 401, a multi-model fusion module 402, a post-processing module 403, and a data enhancement module 404.

The extraction model module 401 is configured to, input annotated training data into each of multiple extraction models, and predict SPO triples satisfying defined relations in the annotated training data through each of multiple extraction models.

The multi-model fusion module 402 is configured to, combine the predicted SPO triples corresponding to each of multiple extraction models, and extract SPO triples satisfying screening conditions from the combined SPO triples.

The post-processing module 403 is configured to, mine SPO triples with missing annotations from the annotated training data based on the SPO triples satisfying screening conditions, in response to that the SPO triples satisfying screening conditions do not satisfy output conditions.

The data enhancement module 404 is configured to, supplement the SPO triples with missing annotations into the annotated training data, and repeat the above actions until the SPO triples satisfying screening conditions satisfy the output conditions.

Furthermore, the multi-model fusion module 402 is configured to: count a number of times each SPO triple in the combined SPO triples is predicted by each of multiple extraction models; and determine that the SPO triple is the SPO triple satisfying screening conditions in response to that a sum of the number of times the SPO triple in the combined SPO triples is predicted by each of multiple extraction models exceeds a preset threshold, or input each SPO triple in the combined SPO triples into a classification model; class each SPO triple in the combined SPO triples into a first category or a second category through the classification model; and determine SPO triples of the first category or SPO triples of the second category as the SPO triples satisfying screening conditions.

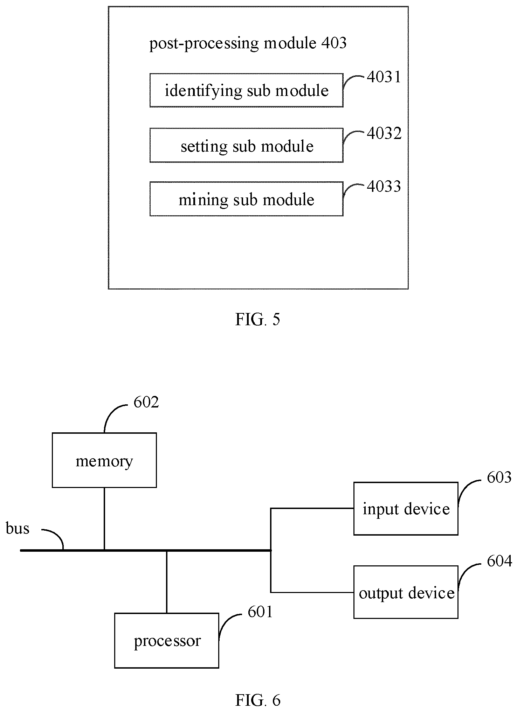

FIG. 5 is a block diagram illustrating a post-processing module according to embodiments of the disclosure. As illustrated in FIG. 5, the post-processing module 403 includes an identifying sub module 4031, a setting sub module 4032, and a mining sub module 4033.

The identifying sub module 4031 is configured to identify each SPO triple satisfying screening conditions to obtain a syntactic feature and a morphological feature of each SPO triple satisfying screening conditions.

The setting sub module 4032 is configured to set at least one mining template based on the syntactic feature and the morphological feature of each SPO triple satisfying screening conditions.

The mining sub module 4033 is configured to mine the SPO triples with missing annotations from the annotated training data based on the at least one mining template.

Furthermore, the multi-model fusion module 402 is further configured to: perform conflict verification on each SPO triple in the combined SPO triples by a preset conflict verification method; extract the SPO triples satisfying screening conditions from SPO triples that are successfully verified; and remove SPO triples that are not successfully verified.

Furthermore, the data enhancement module 404 is further configured to: remove, an annotation of a SPO triple that is not predicted by any extraction model, from the annotated training data.

The above-mentioned apparatus may execute the method provided in any embodiment of the disclosure, and have functional modules and beneficial effects corresponding to the executed method. For technical details that are not described in detail in the above-mentioned apparatus embodiments, reference may be made to the method provided in any embodiment of the disclosure.

### Embodiment Four

Embodiments of the disclosure provide an electronic device and a computer-readable storage medium.

FIG. 6 is a block diagram illustrating an electronic device capable of implementing a method for extracting SPO triples according to embodiments of the disclosure. The electronic device aims to represent various forms of digital computers, such as a laptop computer, a desktop computer, a workstation, a personal digital assistant, a server, a blade server, a mainframe computer and other suitable computer. The electronic device may also represent various forms of mobile devices, such as personal digital processing, a cellular phone, a smart phone, a wearable device and other similar computing device. The components, connections and relationships of the components, and functions of the components illustrated herein are merely examples, and are not intended to limit the implementation of the disclosure described and/or claimed herein.

As illustrated in FIG. 6, the electronic device includes: one or more processors 601, a memory 602, and interfaces for connecting various components, including a high-speed interface and a low-speed interface. Various components are connected to each other through different buses, and may be mounted on a common main board or in other ways as required. The processor may process instructions executed within the electronic device, including instructions stored in or on the memory to display graphical information of the GUI (graphical user interface) on an external input/output device (such as a display device coupled to an interface). In other implementations, multiple processors and/or multiple buses may be used together with multiple memories if desired. Similarly, multiple electronic devices may be connected, and each device provides some necessary operations (for example, as a server array, a group of blade servers, or a multiprocessor system). In FIG. 6, a processor 601 is taken as an example.

The memory 602 is a non-transitory computer-readable storage medium provided by the disclosure. The memory is configured to store instructions executable by at least one processor, to enable the at least one processor to execute a method for extracting SPO triples provided by the disclosure. The non-transitory computer-readable storage medium provided by the disclosure is configured to store computer instructions. The computer instructions are configured to enable a computer to execute the method for extracting SPO triples provided by the disclosure.

As the non-transitory computer-readable storage medium, the memory 602 may be configured to store non-transitory software programs, non-transitory computer executable programs and modules, such as program instructions/modules (such as, an extraction model module 401, a multi-model fusion module 402, a post-processing module 403, and a data enhancement module 404 illustrated in FIG. 4) corresponding to the method for extracting SPO triples according to embodiments of the disclosure. The processor 601 is configured to execute various functional applications and data processing of the server by operating non-transitory software programs, instructions and modules stored in the memory 602, that is, implements the method for extracting SPO triples according to the above method embodiment.

The memory 602 may include a storage program region and a storage data region. The storage program region may store an application required by an operating system and at least one function. The storage data region may store data created according to predicted usage of the electronic device based on the semantic representation. In addition, the memory 602 may include a high-speed random access memory, and may also include a non-transitory memory, such as at least one disk memory device, a flash memory device, or other non-transitory solid-state memory device. In some embodiments, the memory 602 may alternatively include memories remotely located to the processor 601, and these remote memories may be connected to the electronic device capable of implementing the method for extracting SPO triples via a network. Examples of the above network include, but are not limited to, an Internet, an intranet, a local area network, a mobile communication network and combinations thereof.

The electronic device capable of implementing the method for extracting SPO triples may also include: an input apparatus 603 and an output device 604. The processor 601, the memory 602, the input device 603, and the output device 604 may be connected via a bus or in other means. In FIG. 6, the bus is taken as an example.

The input device 603 may receive inputted digital or character information, and generate key signal input related to user setting and function control of the electronic device capable of implementing the method for extracting SPO triples, such as a touch screen, a keypad, a mouse, a track pad, a touch pad, an indicator stick, one or more mouse buttons, a trackball, a joystick and other input device. The output device 604 may include a display device, an auxiliary lighting device (e.g., LED), a haptic feedback device (e.g., a vibration motor), and the like. The display device may include, but be not limited to, a liquid crystal display (LCD), a light emitting diode (LED) display, and a plasma display. In some embodiments, the display device may be the touch screen.

The various implementations of the system and technologies described herein may be implemented in a digital electronic circuit system, an integrated circuit system, an application specific ASIC (application specific integrated circuit), a computer hardware, a firmware, a software, and/or combinations thereof. These various implementations may include: being implemented in one or more computer programs. The one or more computer programs may be executed and/or interpreted on a programmable system including at least one programmable processor. The programmable processor may be a special purpose or general purpose programmable processor, may receive data and instructions from a storage system, at least one input device and at least one output device, and may transmit the data and the instructions to the storage system, the at least one input device, and the at least one output device.

These computing programs (also called programs, software, software applications, or codes) include machine instructions of programmable processors, and may be implemented by utilizing high-level procedures and/or object-oriented programming languages, and/or assembly/machine languages. As used herein, the terms "machine readable medium" and "computer-readable medium" refer to any computer program product, device, and/or apparatus (such as, a magnetic disk, an optical disk, a memory, a programmable logic device (PLD)) for providing machine instructions and/or data to a programmable processor, including machine readable medium that receives machine instructions as a machine readable signal. The term "machine readable signal" refers to any signal for providing the machine instructions and/or data to the programmable processor.

To provide interaction with a user, the system and technologies described herein may be implemented on a computer. The computer has a display device (such as, a CRT (cathode ray tube) or an LCD (liquid crystal display) monitor) for displaying information to the user, a keyboard and a pointing device (such as, a mouse or a trackball), through which the user may provide the input to the computer. Other types of devices may also be configured to provide interaction with the user. For example, the feedback provided to the user may be any form of sensory feedback (such as, visual feedback, auditory feedback, or tactile feedback), and the input from the user may be received in any form (including acoustic input, voice input or tactile input).

The system and technologies described herein may be implemented in a computing system including a background component (such as, a data server), a computing system including a middleware component (such as, an application server), or a computing system including a front-end component (such as, a user computer having a graphical user interface or a web browser through which the user may interact with embodiments of the system and technologies described herein), or a computing system including any combination of such background component, the middleware components, or the front-end component. Components of the system may be connected to each other via digital data communication in any form or medium (such as, a communication network). Examples of the communication network include a local area network (LAN), a wide area networks (WAN), and the Internet.

The computer system may include a client and a server. The client and the server are generally remote from each other and usually interact via the communication network. A relationship between the client and the server is generated by computer programs operated on a corresponding computer and having a client-server relationship with each other.

With the technical solution according to embodiments of the disclosure, the solution first may input the annotated training data into multiple extraction models respectively, and predict the SPO triples satisfying defined relations in the annotated training data through multiple extraction models respectively; then combine the predicted SPO triples corresponding to each of multiple extraction models, and extract the SPO triples satisfying screening conditions from the combined SPO triples; and if the SPO triples satisfying screening conditions do not satisfy the output conditions, mine the SPO triples with missing annotations from the annotated training data based on the SPO triples satisfying screening conditions; and then supplement the SPO triples with missing annotations into the annotated training data, and repeat the above actions until the SPO triples satisfying screening conditions satisfy the output conditions. That is, the disclosure may add the SPO triples with missing annotations into the annotated training data, input the supplemented annotated training data into multiple extraction models respectively, and the above actions are repeated until the SPO triples satisfying screening conditions satisfy the output conditions. Therefore, the recall rate of SPO triples may be improved. In the related SPO extraction method, such as extraction through mining templates or through the single extraction model, it will lead to the low recall rate. Because the disclosure employs multiple extraction models to predict the training data separately, and supplements the SPO triples with missing annotations into the annotated training data, which overcomes the technical problems of low recall rate and high labor costs in the related art, thereby effectively improving the recall rate of SPO triples, saving the labor costs, and improving extraction efficiency. Moreover, the technical solutions of the embodiments of the disclosure are simple and convenient to implement, easy to popularize, and have a wider application range.

It should be understood that, steps may be reordered, added or deleted by utilizing flows in the various forms illustrated above. For example, the steps described in the disclosure may be executed in parallel, sequentially or in different orders, so long as desired results of the technical solution disclosed in the disclosure may be achieved, there is no limitation here.

The above detailed implementations do not limit the protection scope of the disclosure. It should be understood by the skilled in the art that various modifications, combinations, subcombinations and substitutions may be made based on design requirements and other factors. Any modification, equivalent substitution and improvement made within the spirit and the principle of the disclosure shall be included in the protection scope of disclosure.

## Claims

1. A method for extracting subject-predication-object SPO triples, comprising:
inputting (S101; S201) annotated training data into each of multiple extraction models;
predicting (S101; S201) SPO triples satisfying defined relations in the annotated training data through each of multiple extraction models;
combining (S102; S202) the predicted SPO triples corresponding to each of multiple extraction models;
extracting (S102; S202) SPO triples satisfying screening conditions from the combined SPO triples;
mining (S105; S206) SPO triples with missing annotations from the annotated training data based on the SPO triples satisfying screening conditions, in response to that the SPO triples satisfying screening conditions do not satisfy output conditions;
supplementing (S106; S207) the SPO triples with missing annotations into the annotated training data;
repeating the inputting, predicting, combining, extracting, mining and supplementing until the SPO triples satisfying screening conditions satisfy the output conditions.

2. The method of claim 1, wherein extracting (S102; S202) the SPO triples satisfying screening conditions from the combined SPO triples comprises:
counting a number of times each SPO triple in the combined SPO triples is predicted by each of multiple extraction models; and determining that the SPO triple is the SPO triple satisfying screening conditions in response to that a sum of the number of times the SPO triple in the combined SPO triples is predicted by each of multiple extraction models exceeds a preset threshold.

3. The method of claim 1, wherein extracting (S102; S202) the SPO triples satisfying screening conditions from the combined SPO triples comprises:
inputting each SPO triple in the combined SPO triples into a classification model; classing each SPO triple in the combined SPO triples into a first category or a second category through the classification model; and determining SPO triples of the first category or SPO triples of the second category as the SPO triples satisfying screening conditions.

4. The method of any one of claims 1 to 3, wherein mining (S105; S206) the SPO triples with missing annotations from the annotated training data based on the SPO triples satisfying screening conditions comprises:
identifying each SPO triple satisfying screening conditions to obtain a syntactic feature and a morphological feature of each SPO triple satisfying screening conditions;
setting at least one mining template based on the syntactic feature and the morphological feature of each SPO triple satisfying screening conditions; and
mining the SPO triples with missing annotations from the annotated training data based on the at least one mining template.

5. The method of any one of claims 1 to 4, further comprising:
performing (S203) conflict verification on each SPO triple in the combined SPO triples by a preset conflict verification method;
extracting (S203) the SPO triples satisfying screening conditions from SPO triples that are successfully verified; and
removing (S203) SPO triples that are not successfully verified.

6. The method of any one of claims 1 to 5, further comprising:
removing, an annotation of a SPO triple that is not predicted by any extraction model, from the annotated training data.

7. An apparatus for extracting subject-predication-object SPO triples, comprising:
an extraction model module (401), configured to, input annotated training data into each of multiple extraction models, and predict SPO triples satisfying defined relations in the annotated training data through each of multiple extraction models;
a multi-model fusion module (402), configured to, combine the predicted SPO triples corresponding to each of multiple extraction models, and extract SPO triples satisfying screening conditions from the combined SPO triples;
a post-processing module (403), configured to, mine SPO triples with missing annotations from the annotated training data based on the SPO triples satisfying screening conditions, in response to that the SPO triples satisfying screening conditions do not satisfy output conditions; and
a data enhancement module (404), configured to, supplement the SPO triples with missing annotations into the annotated training data.

8. The apparatus of claim 7, wherein the multi-model fusion module (402) is configured to:
count a number of times each SPO triple in the combined SPO triples is predicted by each of multiple extraction models; and determine that the SPO triple is the SPO triple satisfying screening conditions in response to that a sum of the number of times the SPO triple in the combined SPO triples is predicted by each of multiple extraction models exceeds a preset threshold.

9. The apparatus of claim 7, wherein the multi-model fusion module (402) is configured to:
input each SPO triple in the combined SPO triples into a classification model; class each SPO triple in the combined SPO triples into a first category or a second category through the classification model; and determine SPO triples of the first category or SPO triples of the second category as the SPO triples satisfying screening conditions.

10. The apparatus of any one of claims 7 to 9, wherein the post-processing module (403) comprises:
an identifying sub module, configured to identify each SPO triple satisfying screening conditions to obtain a syntactic feature and a morphological feature of each SPO triple satisfying screening conditions;
a setting sub module, configured to set at least one mining template based on the syntactic feature and the morphological feature of each SPO triple satisfying screening conditions; and
a mining sub module, configured to mine the SPO triples with missing annotations from the annotated training data based on the at least one mining template.

11. The apparatus of any one of claims 7 to 10, wherein the multi-model fusion module (402) is further configured to:
perform conflict verification on each SPO triple in the combined SPO triples by a preset conflict verification method;
extract the SPO triples satisfying screening conditions from SPO triples that are successfully verified; and
remove SPO triples that are not successfully verified.

12. The apparatus of any one of claims 7 to 11, wherein the data enhancement module (404) is further configured to:
remove, an annotation of a SPO triple that is not predicted by any extraction model, from the annotated training data.

13. An electronic device, comprising:
at least one processor; and
a memory, communicatively coupled to the at least one processor,
wherein the memory is configured to store instructions executable by the at least one processor, and when the instructions are executed by the at least one processor, the at least one processor is caused to implement a method according to any one of claims 1 to 6.

14. A non-transitory computer-readable storage medium having computer instructions stored thereon, wherein the computer instructions are configured to cause a computer to execute a method according to any one of claims 1 to 6.
